# EUROPEAN PATENT SPECIFICATION

(11) **EP 1 119 194 B1**
(45) Date of publication and mention of the grant of the patent: **29.11.2006**
(21) Application number: 01101267.1
(22) Date of filing: 19.01.2001
(51) Int. Cl.: G11B 27/00

(54) **Audio and video reproduction apparatus, and audio and video reproduction method**
Audio- und Video-Wiedergabeanlage, und Audio- und Video-Wiedergabeverfahren
Appareil de reproduction audio et vidéo, et procédé de reproduction audio et vidéo

(30) Priority: 19.01.2000 JP 2000014112
(43) Date of publication of application: 25.07.2001
(73) Proprietor: Pioneer Corporation, Tokyo-to (JP)
(72) Inventor: Yamada, Takao, c/o Pioneer Corporation, Tokorozawa-shi, Saitama-ken (JP); Ohyama, Nobuo, c/o Pioneer Corporation, Tokorozawa-shi, Saitama-ken (JP); Kamei, Kazuo, c/o Pioneer Corporation, Tokorozawa-shi, Saitama-ken (JP); Kojima, Eiji, c/o Pioneer Corporation, Tokorozawa-shi, Saitama-ken (JP); Miyashita, Masahiko, c/o Pioneer Corporation, Tokorozawa-shi, Saitama-ken (JP); Ohtani, Toshio, c/o Pioneer Corporation, Tokorozawa-shi, Saitama-ken (JP)
(74) Representative: Reinhard - Skuhra - Weise & Partner

(56) References cited:
- EP-A- 0 602 943
- EP-A- 0 823 817
- PATENT ABSTRACTS OF JAPAN vol. 1999, no. 11, 30 September 1999 (1999-09-30) -& JP 11 149717 A (TOSHIBA CORP), 2 June 1999 (1999-06-02)

## Description

### BACKGROUND OF THE INVENTION

### 1. Field of the Invention

The present invention belongs to a technical field of an information reproduction apparatus and method for reproducing audio information and video information using an information recording medium such as high density optical disc capable of recording information such as voice or image represented by DVD with high density.

### 2. Description of the Related Art

Conventionally, so called CD (Compact Disc), LD (Laser Disc) and the like are well employed in general as optical discs having information such as voice or image recorded therein.

In these CDs and the like, voice information and image information are recorded together with time information indicating a time at which respective items of information should be reproduced when a reproduction start position that each CD or the like has is defined as a reference. Thus, it is possible not only to cause general normal reproduction in which recorded information is reproduced in the recorded order, but also to extract and listen to only a desired music number of a plurality of recorded music numbers or to listen to the music number by randomly changing the reproduction order in a CD, for example.

Voice information and image information in a recording apparatus or reproduction apparatus for such CD or LD is handled in units of audio frames or video frames during recording, editing, and reproducing, and can be accessed in units of these frames.

In addition, in the CD or LD, it is possible to execute variable speed reproduction such as fast feed reproduction or slow reproduction is possible. Further, it is possible to speedily search a desired reproduction point or to carefully observe a desired reproduction point.

In the conventional apparatus, however, in the case of variable speed reproduction, only video information is reproduced, and a sound is not reproduced, or alternatively video reproduction data is selected with reference to video information. Thus, there has been a problem that audio information is intermitted or is audible unnaturally.

Document JP 11 149 717 discloses a reproduction apparatus which outputs the decoded video signal, whose video time stamp is coincident with the audio time stamp of the decoded audio signal, in synchronisation with the decoded audio signal.

### SUMMARY OF THE INVENTION

The present invention has been made in view of the above-described problems. It is an object of the present invention to provide an audio and video reproduction apparatus method capable of performing variable seed reproduction free of strangeness for a reproduction sound of audio information during reproduction.

The above object of the present invention can be achieved by an audio and video reproduction apparatus according to claim 1 and an audio and video reproduction method according to claim 6.

### BRIEF DESCRIPTION OF THE DRAWINGS

Fig. 1 is a block diagram showing a general configuration of an audio and video reproduction apparatus in a first embodiment of the present invention;
Fig. 2 is a flowchart showing audio and video output processing in the audio and video reproduction apparatus shown in Fig. 1;
Fig. 3A is a timing chart showing a relationship between a video frame and an audio frame during normal reproduction in the audio and video reproduction apparatus shown in Fig. 1;
Fig. 3B is a timing chart showing a relationship between a video frame and an audio frame during variable speed reproduction in the audio and video reproduction apparatus shown in Fig. 1;
Fig. 4 is a timing chart showing data outputted from a video/audio decoder portion in a second embodiment of the present invention;
Figs 5A is a diagram showing a configuration example of a decoder portion and an output control portion of an audio and video reproduction apparatus in the third embodiment of the present invention (No. 1);
Fig. 5B is a diagram showing a configuration example of a decoder portion and an output control portion of the audio and video reproduction apparatus in the third embodiment of the present invention (No. 2);
Fig. 5C is a diagram showing a configuration diagram of a decoder portion and an output control portion of the audio and video reproduction apparatus in the third embodiment of the present invention (No. 3);
Fig. 6A is a diagram showing a configuration example of a decoder portion and an output control portion of the audio and video reproduction apparatus in the third embodiment of the present invention (No. 4);
Fig. 6B is a diagram showing a configuration example of a decoder portion and an output control portion of the audio and video reproduction apparatus in the third embodiment of the present invention (No. 5);
Fig. 6C is a diagram showing a configuration diagram of a decoder portion and an output control portion of the audio and video reproduction apparatus in the third embodiment of the present invention (No. 6);

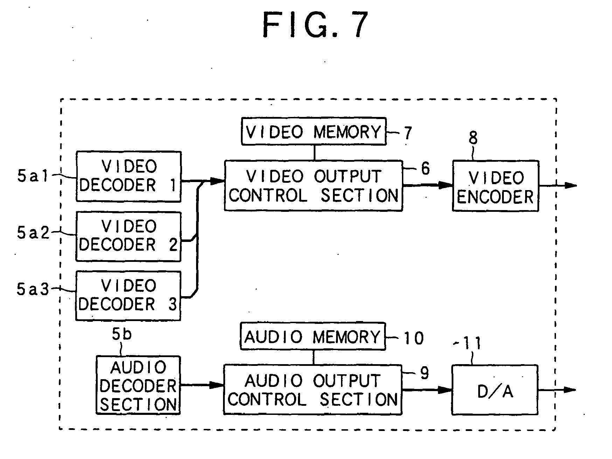

Fig. 7 is a diagram showing a configuration example of a decoder portion and an output control portion of the audio and video reproduction apparatus in the third embodiment of the present invention;
Fig. 8 is a diagram showing an input/output of data at the decoder portion and output control portion shown in Fig. 7;
Fig. 9A is a diagram showing a closed GOP; and
Fig. 9B is a diagram showing an open GOP.

### DETAILED DESCRIPTION OF THE PREFERRED EMBODIMENTS

Hereinafter, preferred embodiments of the present invention will be described with reference to the accompanying drawings.

### (First Embodiment)

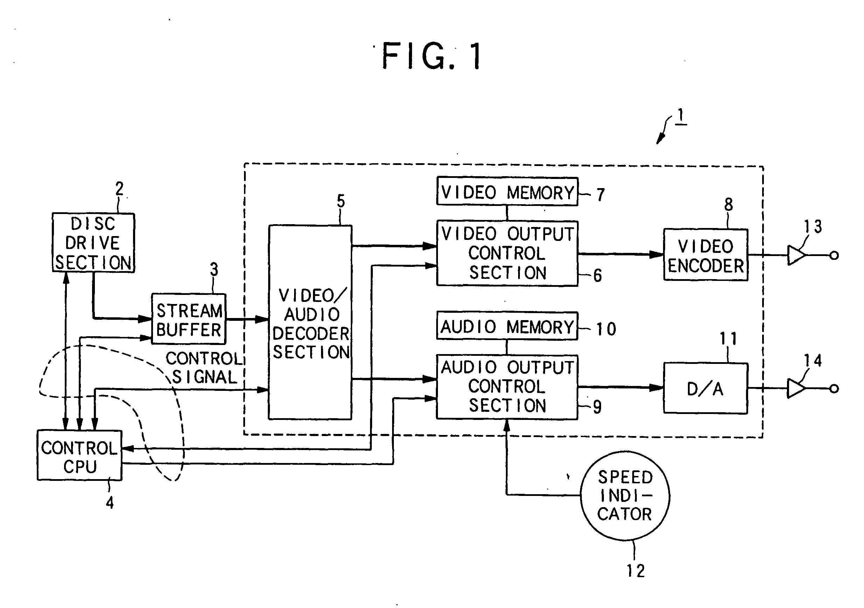

Now, a first embodiment of the present invention will be described with reference to Figs. 1 to 3.

Fig. 1 is a block diagram showing a general configuration of a DVD reproduction apparatus as an example of an audio and video reproduction apparatus in the present embodiment.

As shown in Fig. 1, a DVD reproduction apparatus 1 is composed of: a disc dive section 2; a stream buffer 3; a control CPU 4; a video/audio decoder section 5 capable of acceleration and decoding; a video output control section 6; a video memory 7 ; a video encoder 8; an audio output control portion 9; an audio memory 10; a D/A converter 11; a speed indicator 12; and amplifiers 13 and 14.

The disc drive section 2 is means for extracting data from a DVD. This section is composed of, for example, a spindle motor, a slider motor, a drive controller, a pickup, a modulation correction section and the like, which are not shown in the figure. The pickup includes, for example, a laser diode, a deflection beam splitter, an object lens, an optical detector and the like, which are not shown in the figure. The pickup irradiates the DVD (not shown) with a light beam as reproduction light, receives the reflection light from the DVD of the light beams, and outputs a detection signal corresponding to an information pit formed on the DVD. At this time, an information track on the DVD is exactly irradiated with the light beam. In addition, a control signal is outputted to the spindle motor and the slider motor by means of the drive controller so as to exactly connect a focal point on an information recording face on the DVD, and tracking servo control and focus servo control are performed to the object lens. Further, a detection signal outputted from the pickup is inputted to the demodulation correction section, demodulation processing and error correction processing are performed, and a modulation signal is generated, and then, is outputted to the stream buffer 3.

The stream buffer 3 is means for temporarily storing composite stream data such as video or audio compressed in accordance with the MPEG2 (Moving Picture Expert Group 2) system. This buffer is composed of RAM of FIFO (First In First Out) and the like.

In the DVD video standards, composite stream data is composed in reproduction units called cells having ID numbers assigned thereto. Further, each cell is composed of one or more information units called VOBU (Video Object Unit). One VOBU has a reproduction time of 0.4 second to 1 second. A navigation pack having search information recorded therein for reproduction and information concerning reproduction control is always placed at the head of the VOBU. Then, video data, audio data, subsidiary picture data and the like, each corresponding to integer number of GOPs (Group Of Picture)are packed, and are inserted by time division.

Here, GOP is a minimum unit of image that can be reproduced solely in the standards of the MPEG2 system, and video data is composed of one or more GOPs. In addition, a variable rate system in which a quantity of data contained in each GOP is not constant is adopted in the MPEG2 system. Thus, in the DVD apparatus 1, a difference in the amount of data between GOPs is compensated for by using the stream buffer 3.

In addition, in the DVD, there is a case in which one cell is recorded to be divided into a plurality of units called interleaved unit. In this case, only interleaved units that configures cells of the same ID numbers are continuously detected and reproduced while causing track-jump from one interleave unit to another interleaved unit. One interleaved unit has a reproduction time in which data can be continuously outputted from the stream buffer 3, even if data input to the stream buffer 3 is stopped by the pickup jumping from one interleaved unit to another interleaved unit. The DVD reproduction apparatus 1 is configured so as to continuously output data discontinuously inputted to the stream buffer 3 in every interleaved unit by using the stream buffer 3. With such configuration, cells of discrete ID numbers can be reproduced seamlessly.

In addition, an output of the composite stream data from the stream buffer 3 to the video/audio decoder section 5 is controlled by means of the control CPU 4 so that decode processing is not interrupted when the buffers in the video/audio decoder section 5 overflow or become empty.

A control CPU 4 is a means for outputting a control signal to each of a drive controller of the disc drive section 2, the stream buffer 3, the video/audio decoder section 5, the video output control section 6, and the audio output control section 9, and controlling operation of each section. In particular, as described later, a video frame to be selected at each display timing in accordance with a frame frequency is determined so that a position on a time axis of audio data to be reproduced at a variable speed is coincident with a position on the time axis of a video frame. Then, processing for notifying the video output control section 6 of the determination information is performed.

The video/audio decoder section 5 is means for accelerating and decoding composite stream data outputted from the stream buffer 3 into video data, audio data, and subsidiary picture data. The present embodiment describes the capacity of acceleration and decoding as twice as high as current decoding seed.

Video data inputted to the video/audio decoder portion 5 is data that compressed by the MPEG2 system when 27 MHz is defined as a reference clock. In addition, the audio data includes linear PCM (Pulse Code Modulation) using a sampling frequency of 48 kHz, MPEG audio, or Dorby AC-3 (Dolby Audio Code number 3). Subsidiary picture data is obtained by defining data to be superimposed on a main image such as menu, words display of karaoke on a bit map, and is compressed and encode by a run length system.

The video/audio decoder section 5 in the present embodiment is composed of, for example, a de-multiplexer, a video buffer, an audio buffer, a subsidiary picture buffer, a video decoder, an audio decoder, a subsidiary picture decoder and the like in order to decode the video data, the audio data and the subsidiary picture data described above.

The de-multiplexer separates the video data, the audio data, and the subsidiary picture data from the composite stream data, and outputs them to the video buffer, the audio buffer, and the subsidiary picture buffer, respectively.

The video buffer temporarily stores the video data, and outputs it to the video decoder. The video buffer is intended to compensate for dispersion in the amount of data for each picture in the video data compressed by the MPEG2 system.

The video decoder is means for decoding video data, which is compressed and encoded by the MPEG2 whose reference clock is 27 MHz, at a speed twice as high as usual, and outputting a video signal at a speed twice as high as usual at which the reference clock is 54 MHz to a video output control section 6.

The subsidiary picture buffer to which the subsidiary picture data is inputted temporarily accumulates the inputted subsidiary picture data, and outputs it to the subsidiary picture decoder. The subsidiary picture buffer outputs subsidiary picture information included in the subsidiary picture data in synchronism with image information corresponding to the subsidiary picture information. Then, the subsidiary picture data synchronized with the image information is inputted to the subsidiary picture decoder, is decoded, and is inputted to the video output control section 6 as decoded subsidiary picture data.

The audio buffer to which audio data is inputted is composed of a FIFO memory and the like temporarily accumulates the inputted audio data and outputs it to the audio decoder.

In the present embodiment, since the acceleration and decoding ability is defined as twice of normal decoding speed, the audio decoder demodulates audio data with the sampling frequency of 48 kHz at a speed twice as high as usual and outputs the demodulated audio data to the audio output control section 9 so that the sampling frequency become 96 kHz.

Next the video output control section 6 is a control section which temporarily stores video data outputted from the video/audio decoder section 5 in the video memory 7, and outputs video frame in which a system clock is 27 MHz. In particular, in the present embodiment, the video output control section 6 selects and reads out a video frame to be outputted at a display timing according to a frame frequency from the video memory 7, thus enabling variable speed reproduction of video data. However, the video frame to be selected is determined by not the video output control section 6 but the control CPU 4. The video output control section 6 receives notification of an address from the control CPU 4, and outputs the video frame stored in the address of the video memory 7.

In addition, time reference value information referred to a time stamp indicating when decoding and reproduction should be performed can be added to composite stream data compressed and encoded in the MPEG2 system every unit of data required for decoding and reproduction of the video frame, and a time stamp is always added to data that corresponds to at least a first video frame. The video output control section 6 acquires a time stamp relevant to the first video frame when storing the video frame in the video memory 7, and outputs the acquired time stamp to the control CPU 4 according to the request of the control CPU 4.

The video encoder 8 is means for encoding the video frame outputted from the video output control section 6 into data in accordance with the PAL system, NTSC system or RGB system. The encoded data is outputted via the amplifier 13.

Next an audio output control section 9 is a control section that temporarily stores audio data of a linear PCM system, which is outputted as data at a sampling frequency of 96 kHz from a video/audio decoder 5, in the audio memory 10, and outputs it as audio data at a sampling frequency of 48 kHz. In particular, in the present embodiment, audio data to be outputted at an output timing according to a sampling frequency of 48 kHz is selected and read out from the audio memory 10, so that it is possible to perform variable speed reproduction of audio. The audio data to be selected is determined by an audio output control section 9 based on reproduction speed information outputted from the speed indicator 12. The reproduction speed information from the speed indicator 12 corresponds to information indicating a rate of increasing or decreasing of speed to a normal reproduction speed. For example, if audio data is stored in one address of the audio memory 10 every one sampling timing, in the case where a reproduction speed is a normal speed, audio data stored in the audio memory 10 is read out in order of address, and is outputted at a frequency of 48 kHz, whereby the outputted audio data is reproduced at a normal speed.. In addition, in the case where a reproduction speed is reproduced at a speed twice as high as a normal speed, audio data stored in the audio memory 10 is read out every other address, and is outputted at a frequency of 48 kHz, whereby the outputted audio data is reproduced at a speed twice as high as a normal speed. In addition, in the case where a reproduction speed is half of the normal speed, data of the same address is read out twice, and is outputted at a frequency of 48 kHz, whereby the outputted data is reproduced at a speed that is half of the normal speed.

With such configuration, in the present embodiment, variable speed reproduction for increasing or decreasing a speed at a predetermined rate is made possible. In addition, the rate of increasing or decreasing of speed is set to an extent such that natural reproduction is effected without any dropout of audio output.

In addition, a time stamp of audio data first targeted for decoding is added to composite stream data compressed and encoded in the MPEG2 system as in a time stamp of data that corresponds to the aforementioned first video frame. The audio output control section 9 acquires a time stamp relevant to the first audio data. Then, with respect to the subsequent time stamps, time stamps of audio data being outputted are calculated according to the sampling frequency or bit rate of audio data and according to how to skip or repeat an address on the audio memory 10.

In this manner, at the audio output control section 9, even in the case where the aforementioned variable speed reproduction is performed, a time stamp of audio data being outputted can be exactly calculated. Thus, the control CPU 4 acquires a time stamp of audio data being currently outputted from the audio output control section 9 immediately before the display timing of each video frame. Then the control CPU 4 calculates which address of the video memory 7 is used to store a video frame of a time stamp that is coincident with a time stamp of audio data. As described above the control CPU 4 already acquires the time stamp of the first video frame from the video output control section 6, and can calculate the time stamp of the video frame in each address on the video memory 7 as in the case of the audio data. Then, the control CPU 4 notifies the video output control section 6 of the calculated address, whereby the video output control section 6 selects and outputs a video frame stored in the notified address on the video memory 7 as a video frame to be displayed at a display timing that corresponds to a frame frequency.

With such configuration, even if audio is reproduced at a variable speed, video frames in which time stamps are coincident with each other can be displayed. That is, a position on a time axis of audio data during reproduction is coincident with that on a time axis of a video frame, and audio and video synchronization reproduction is performed.

The D/A converter 11 converts an audio frame of digital data outputted from the audio output control section 6 into analog data, and outputs the converted analog data. The converted data is outputted via the amplifier 14.

The speed indicator 12 that is a speed indicating section is provided with: an operating section capable of rotating or turning in two opposite directions; and a computing section for computing a reproduction direction and a reproduction speed according to an amount of operation in the operating section, wherein the reproduction direction data and reproduction speed data according to a user operation in the operating portion are outputted to the audio output control section 9. Examples of the operating section can include a disc shaped volume control employed in a radio or a small sized audio device and the like, the volume control being supported so that it can be turned and turning shaft can be vertically moved; a knob type volume control being supported so that it can be turned, and further, a sphere shaped operation object being supported so that it can be turned.

The description of the general configuration of the DVD reproduction apparatus according to the present embodiment has now been completed.

### (Variable speed reproduction processing)

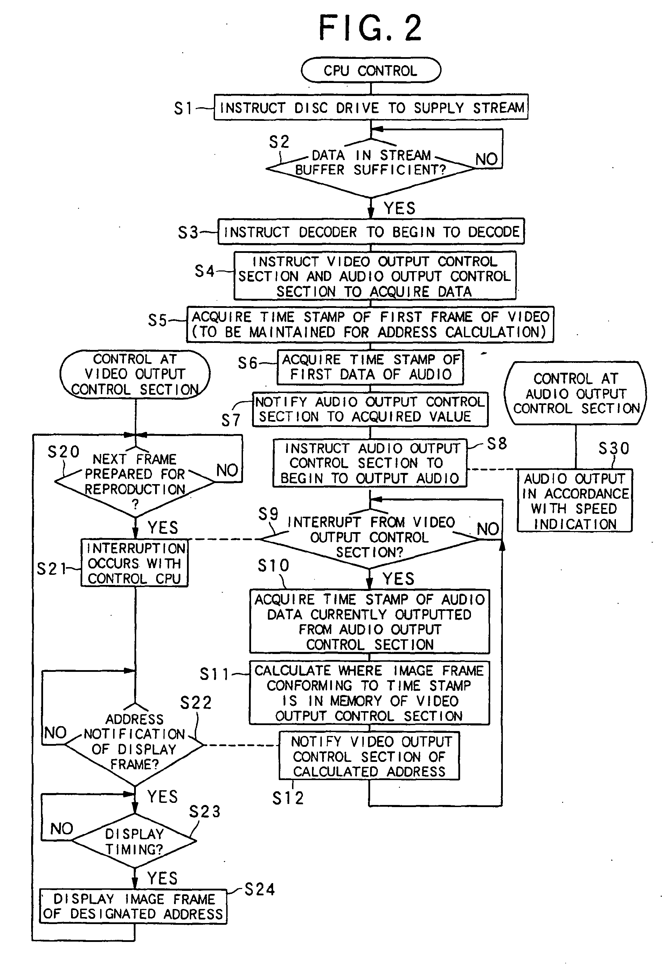

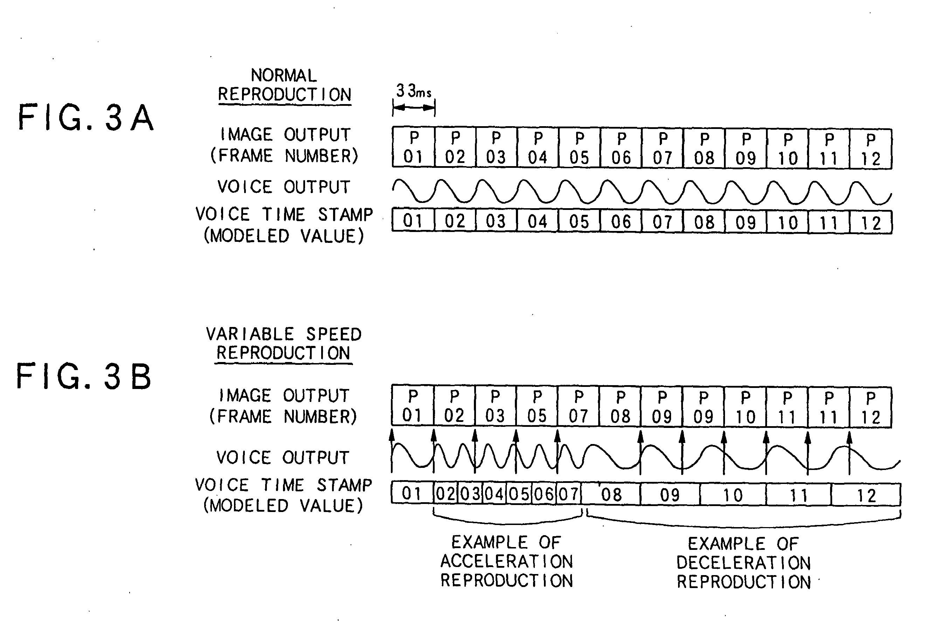

Now, variable speed reproduction processing in the DVD reproduction apparatus according to this embodiment will be described with reference to a flowchart shown in Fig. 2 and a timing chart shown in Fig. 3.

First, when an instruction of the start of a repetitive operation is provided by pressing a reproduction switch or the like (not shown), the control CPU 4 instructs the disc drive section 2 to supply a composite data stream (step S1).

In this manner, the disc drive portion 2 begins to supply the composite data stream to the stream buffer 3, and the composite data stream is stored in the stream buffer 3. Accordingly, the control CPU 4 determined whether or not sufficient amount of data is stored for seamless reproduction in the stream buffer 3 (step S2).

In the case where it is determined that a sufficient amount of data has been stored in the stream buffer 3 after an elapse of a predetermined time, for example, the control CPU 4 instructs the video/audio decoder section 5 to begin decoding (step S3). In this manner, the video audio decoder section 5 begins decoding video data and audio data, decompresses and decodes data compressed and encoded in accordance with the MPEG2 system, and outputs the decoded video frame and decoded audio data. In this embodiment, decoding at a speed twice as high as usual is performed by a video/audio decoder section 5.

Next, the control CPU 4 instructs the video output control section 6 and the audio output control section 9 to begin to acquire a video frame and audio data while the control CPU 4 controls data transfer from the video audio decoder section 5 to the video output control section 6 and the audio output control portion 9 (step S4).

In addition, at the same time as the above, the control CPU 4 acquires a time stamp of a first video frame and a time stamp of a first audio frame from the video/audio decoder section 5 (steps S5 and S6). The time stamp of the acquired video frame is maintained by the control CPU 4 for the purpose of video frame determination processing based on address calculation of the video memory 7 described later. Then, the control CPU 4 notifies the audio output control section 9 of the time stamp of the acquired audio frame (step S7).

The video output control portion 6 instructed to acquire a video frame acquires the video frame outputted from the video/audio decoder section 5, and stores the outputted video frame in the video memory 7. In addition, the audio output control section 9 instructed to acquire audio data as well acquires audio data outputted from the video/audio decoder section 5, and stores the data in an audio memory 10. At this time, the time stamp of each item of audio data is calculated based on the time stamp of the previously notified first audio data, sampling frequency and bit rate of the audio data.

Then, the control CPU 4 instructs the audio output control section 9 to begin outputting audio data (step S8).

In the video output control section 6, a video frame to be reproduced is already prepared in the video memory 7 (step S20: YES), an interruption is generated to the control CPU 4 based on an instruction to begin outputting from the control CPU 4 (step S21).

Corresponding to this, the control CPU 4 detects that an interruption from the video output control section 6 is generated (step S9: YES), a time stamp of audio data being currently outputted is acquired from the audio output control section 9 (step S10).

Next, the control CPU 4 calculates which address of the video memory 7 is provided with a video frame having a time conforming to the time stamp acquired from the audio output control section 9 (step S11).

Then, the control CPU 4 notifies the video output control section 6 of a calculated address (step S12).

On the other hand, when the video output control section 6 receives notification of an address from the control CPU 4 (step S22 YES), it is determined whether or not a timing of displaying a frame stored in the notified address is reached (step S23). In the case where the display timing is obtained (step S23: YES), the video frame stored in the address is outputted (step S24).

Immediately before the display timing of the video frame is obtained according to a frame frequency, it is determined that reproduction of the next frame is ready (step S20: YES) . An interruption is generated with the control CPU 4 again (step S21). Hereinafter, similar processing is repeated.

On the other hand, the user operates the speed indicator 12 while the user listens to audio to be reproduced and views a video to be reproduced, so that an instruction of a change in reproduction speed can be provided. Then, the audio output control section 9 performs audio output in accordance with the instruction of changing this reproduction speed (step S30). The following description will be specifically given to a case in which the instruction of a change of a reproduction speed is not provided, and a reproduction is effected at a normal speed; processing when an instruction of acceleration reproduction is then provided and processing when an instruction of deceleration reproduction is last provided. In the following description, a video signal system is defined as an NTSC system.

### (Reproduction due to normal reproduction speed)

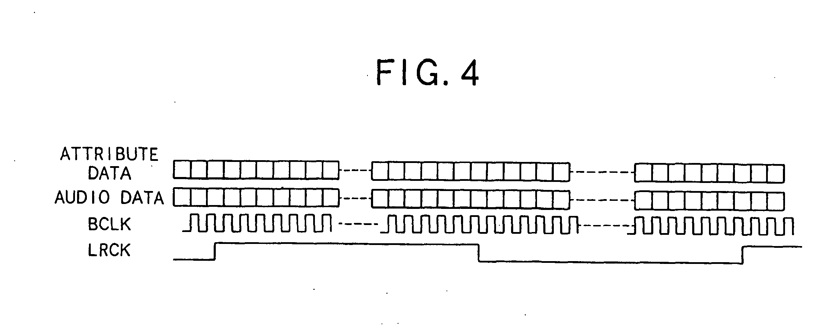

For example, as shown in Fig. 3A, assume that the time stamp of the first audio data is "01". Although the time stamp is actually time information, assume that a modeled value of "01", "02", ... is employed to simplify description. The control CPU 4 calculates an address of a video frame of the time stamp "01", and notifies the video output control section 6 of the address (step S12). When the video output control section 6 that receives this notification (step S22 : YES), if a display timing is reached (step S23: YES), a video frame of the time stamp "01" stored in this address is outputted (step S24). As a result, as shown in Fig. 4A, audio and video reproduction is performed in a state in which an audio frame is synchronized with a video frame.

Next, although the video output control section 6 determined whether or not reproduction of the next video frame is ready immediately before an elapse of 33 ms that is a time interval corresponding to a frame frequency from the start of outputting a video frame of the time stamp "01" (step S20), the first number frame is stored in advance in the video memory 7. Thus, it is determined that reproduction is ready (step S20 YES), and an interruption is generated in the control CPU 4 (step S21). At this time, if the time stamp of audio data reproduced is "02", the control CPU 4 calculates an address of the time stamp "02", and notifies the video output control section 6 of the address (step S12). Then, when the video output control section 6 receives this address (step S22: YES), it is determined that the display timing is reached after an elapse of 33 ms from the start of outputting the first video frame (step S23: YES), and the video frame of the time stamp "02" is outputted. Hereinafter, by performing processing similarly, as shown in Fig. 4A, audio data and a video frame are generally reproduced in synchronism with each other at a reproduction speed.

The control at the video output control section 6 is not limited to examples shown in steps S20 to S24 in Fig. 2. For example, the control section may be configured so that an interruption is always generated for the control CPU 4 from the video output control section 6 with each predetermined time in synchronism with every display timing of 33 ms irrespective of the presence or absence of a video frame (step S20) to be reproduced in the video frame 7. In addition, the control section may be configured to display an image frame of a fixed address with every display timing of 33 ms irrespective of the presence or absence of address notification of the display frame (step S22). Further, in the control CPU 4, when a video frame to be displayed is not present in the video memory 7, instructs the video output control section 6 of the output mute, or of an image output with its single color, whereby distortion of display can be prevented.

### (Acceleration reproduction)

Now, a description will be given to a case in which data for instructing acceleration reproduction is outputted from a speed indicator 12. For example, as shown in Fig. 4B, assume that normal reproduction is performed up to audio data of the time stamp "01", and acceleration reproduction processing is begun at the audio output control section 9 from audio data of the time stamp "02". In this case, after a video frame of the time stamp "01" has been outputted, when a timing of preparation for the next video frame is reached (step S20: YES), the video output control section 6 generates interruption for the control CPU 4 (step S21). When the control CPU 4 receives this interruption (step S9: YES), it acquires a time stamp of audio data being currently reproduced and outputted from the audio output control section 9 (step S10). In an example shown in Fig. 4B, assuming that the time stamp of audio data at this time is "02", the audio output control section 9 calculates an address of a video frame of the time stamp "02" (step S11). Then it notifies the video output control portion 6 of the calculated address (step S12).

When the video output control section 6 receives notification of an address corresponding to a video frame of this time stamp "02" (step S22: YES), it is determined that a display timing of the next video frame is reached after 33 ms from the start of displaying a video frame of the time stamp "01" in an example shown in Fig. 4B (step S23: YES). Then, a video frame of the timing stamp "02" is outputted (step S24).

Next, the video output control section 6 generates an interrupt for the control CPU 4 (step S21) in order to prepare for reproduction of the next frame (step S20: YES) immediately before an elapse of 33 ms from the start of displaying a video frame of the time stamp "02". However, the audio output control section 9 performs acceleration reproduction. Thus, as shown in Fig. 4B, the time stamp of audio data has been already switched to "03" when an interruption is generated. Therefore, when the control CPU 4 receives the interruption (step S9: YES), and the time stamp of audio data being currently reproduced and outputted is acquired from the audio output control section 9 (step S10), the time stamp at this time is set to "03". The control CPU 4 calculates an address corresponding to the video frame of the time stamp "03" (step S11), and notifies the video output control section 6 of the calculated address (step S12) .

On the other hand, when the video output control section 6 receives notification of this address (step S22: YES), it is determined that a display timing of the next frame is reached after 33 ms from the start of displaying the time stamp "02" (step S23: YES), and the video frame of a time stamp "03" is outputted (step S24).

Next, the video output control section 6 generates an interruption for the control CPU 4 (step S21) in order to prepare for reproduction of the next frame (step S20: YES) immediately before an elapse of 33 ms from the start of displaying the video frame of the time stamp "03". However, acceleration reproduction is continued at the audio output control section 9. Thus, as shown in Fig. 4B, the time stamp of audio data is switched from "03" to "04" until an interruption has been generated. When such interruption is generated, the time stamp is further switched to "05". Therefore, when the control CPU 4 receives the interruption (step S9: YES), and a time stamp of audio data being currently reproduced and outputted is acquired from the audio output control section 9 (step S10), the time stamp at this time is set to "05". Then, the control CPU 4 calculates an address relevant to the video frame of the time stamp "05" (step S11), and notifies the video output control portion 6 of the calculated address (step S12).

On the other hand, when the video output control section 6 receives notification of this address (step S22: YES), it is determined that the display timing of the next frame is reached after 33 ms from the start of displaying the time stamp "03" (step S23: YES). Then, the video frame of the time stamp "05" is outputted (step S24). Therefore in this case, the video frame of the time stamp "04" is skipped, and the video frame of the time stamp "05" following the video frame of the time stamp "03" is outputted.

Hereinafter, similarly, the time stamp of audio data is switched from "05" to "06", and then, to "07" until the next interruption generation timing has been obtained. Therefore, in this case as well, the video frame of the time stamp "06" is skipped, and the video frame of the time stamp "07" is outputted.

As described above, in the case where acceleration reproduction is performed at the audio output control section 9, natural reproduction without dropout of sound is performed for audio data. With respect to the video frame, reproduction of the video frame synchronized with the time stamp of audio data reproduced in an accelerated manner is performed, and thus, specific video display synchronized with an audio output is performed.

### (Deceleration reproduction)

Now, a description will be given to a case in which data for instructing deceleration reproduction is outputted from a speed indicator 12. For example, as shown in Fig. 4B, assume that reproduced in an accelerated manner is performed up to audio data of the time stamp "07", and deceleration reproduction processing is begun from audio data of a time stamp "08" to the audio output control section 9. In this case, after the video frame of the time stamp "07" has been outputted, when a timing of determining the next video frame is reached (step S20 : YES), the video output control section 6 generates an interruption for the control CPU 4 (step S21). When the control CPU 4 receives this interruption (step S20: YES), it acquires a time stamp of audio stamp being current reproduced an outputted from the audio output control section 9 (step S10). In an example shown in Fig. 4B, assuming that a time stamp of the audio data at this time is "08", the audio output control section 9 calculates an address of a video frame of the time stamp "08" (step S11). Then, it notifies the video output section 6 of the calculated address (step S12).

When the video output control section 6 receives notification of an address corresponding to a video frame of this time stamp "08" (step S22: YES), it is determined that a display timing of the next video frame is reached after 33 ms from the start of displaying a video frame of the time stamp "07" in an example shown in Fig. 4B (step S23: YES), the video frame of the time stamp "08" is outputted (step S24).

Next, the video output control section-6 generates an interruption for the control CPU 4 in order to prepare for reproduction of the next frame (step S20: YES) immediately before an elapse of 33 ms from the start of displaying a video frame of the time stamp "08" (step S21). However, the audio output control section 9 performs deceleration reproduction. Thus, as shown in Fig. 4B, the time stamp of the audio frame has been already switched to "09" when an interruption is generated. Therefore, when the control CPU 4 receives the interruption (step S9: YES), and a time stamp of audio data being currently reproduced and outputted is acquired from the audio output control section 9, the time stamp at this time is set to "09". Then, the control CPU 4 calculates an address relevant to the video frame of the time stamp "09" (step S11), and notifies the video output control portion 6 of the calculated address to (step S12).

On the other hand, when the video output control section 6 receives notification of this address (step S22: YES), it is determined that the display timing of the next frame is reached after 33 ms from the start of displaying of the time stamp "08" (step S23: YES). Then, the video frame of the time stamp "09" is outputted (step S24).

Next, the video output control section 6 generates an interruption for the control CPU 4 in order to prepare for reproduction of the next frame (step S20: YES) immediately before an elapse of 33 ms from the start of displaying a video frame of the time stamp "09" (step S21). However, the audio output control section 9 continues deceleration reproduction. Thus, as shown in Fig. 4B, the time stamp of an audio frame is kept to be "09" during generation of interruption as well. Therefore, when the control CPU 4 receives the interruption (step S9: YES), and acquires a time stamp of audio data being currently reproduced and outputted from the audio output control section 9 (step S10), the time stamp at this time is kept to be "09". The control CPU 4 calculates an address relevant to the video frame of the time stamp "09" again (step S11), and notifies the video output control section 6 of the calculated address again (step S12).

On the other hand, when the video control section 6 receives notification of this address (step S22: YES), it is determined that the display timing of the next frame is reached after 33 ms from the start of displaying the time stamp "09" (step S23 YES). Then, the video frame of the time stamp "09" is outputted again (step S24). Therefore, in this case, the video frame of the time stamp "09" is outputted twice.

Hereinafter, similarly, the time stamp of audio data is switched from "09" to "10" by generation timing of the next interruption has been reached. Therefore, after the video frame of the timing stamp "09" is outputted twice, the video frame of the time stamp "10" is outputted. Further, the time stamp of audio data is switched from "10" to "11" by generation timing of the next interruption has been reached. Therefore, the video frame of a time stamp 11 is outputted next to the video frame of the time stamp "10". Furthermore, at the next interruption timing as well, the time stamp of audio data is kept to be "11". Then, the video frame of the time stamp "11" is repeated by two frames.

As described above, in the case where deceleration reproduction is performed at the audio output control section 9, natural reproduction without dropout of sound is performed for audio data. In addition, a plurality of video frames are repeatedly outputted, and a video frame synchronized with the time stamp of audio data reproduced in a decelerated manner is reproduced. Thus, proper video display synchronized with audio output is performed.

In the present embodiment, although a description has been given to a case of general reproduction, acceleration reproduction, and deceleration reproduction, similar processing is performed when reproduction is temporarily stopped. Namely, in the case of temporary stoppage, a time stamp of audio data does not change. Thus, the video frame of the time stamp during temporary stoppage is repeatedly outputted.

In addition, in the present embodiment, although a timing of acquiring a time stamp from video data and audio data is defined as a timing at which video frame and audio data are read from the video/audio decoder 5 by the video output control section 6 and the audio output control section 9, the present invention is not limited to such configuration. For example when composite stream is stored in the stream buffer 3, a time stamp may be read.

In addition, in the present embodiment, although an arrangement is provided such that the time stamp of the first video frame and the audio data are acquired in the control CPU 4, and the video output control section 6 is notified of the address on the video memory 7 obtained by calculation, the present invention is not limited to such arrangement. For example, arrangement is provided such that a time stamp of audio data is acquired at the control CPU 4, the video output control section 6 is notified of the time stamp, and an address on the video memory 7 is calculated at the video control section.

### (Second Embodiment)

Now a second embodiment of the present invention will be described with reference to Fig. 4.

The present embodiment is efficient when data is transferred and controlled between an output of a video/audio decoder section 5 and an input of an audio output control section 9.

Namely, in a configuration of the first embodiment, at the video/audio decoder section 5, double speed decoding is performed irrespective of a reproduction speed. Thus, depending on the reproduction speed at the audio output control section 9, an amount of data stored in the video/audio decoder section 5 is more than that of data stored in the audio memory 10 of the audio output control section 9. There occurs a need to temporarily stop transferring.

In this case, although mute data is outputted from a video/audio decoder section 5 as an example, the audio output control section 9 cannot be determined whether muting is in progress or reproduction of no-sound state is performed. Therefore, proper processing as to whether a time stamp is proceeded or stopped cannot be performed.

In the present embodiment, as shown in Fig. 4, arrangement is provided so that data called attribute data in synchronism with audio data is outputted from the audio decoder section 5 to the audio output control section 9. In addition, as shown in Fig. 4, the audio data and attribute data are outputted in synchronism with BCLK (bit clock which is clock corresponding to sampling frequency), and LRCK (LR clock) is also outputted in synchronism with BCLK.

The contents of attribute data may be data indicating mute information for transferring and controlling.

With such configuration, the audio output control section 9 can determine properly whether the audio data to be acquired is mute data or data in no-sound state, and time stamp processing can be performed properly. As a result, when transfer control is performed, the time stamp of a video frame is not acquired mistakenly. In addition, during no-sound state, the time stamp of a correct video frame is acquired, and correct video reproduction is performed.

The contents of attribute data may be ID (time stamp information) of audio data or data representative of copyright information and the like.

### (Third Embodiment)

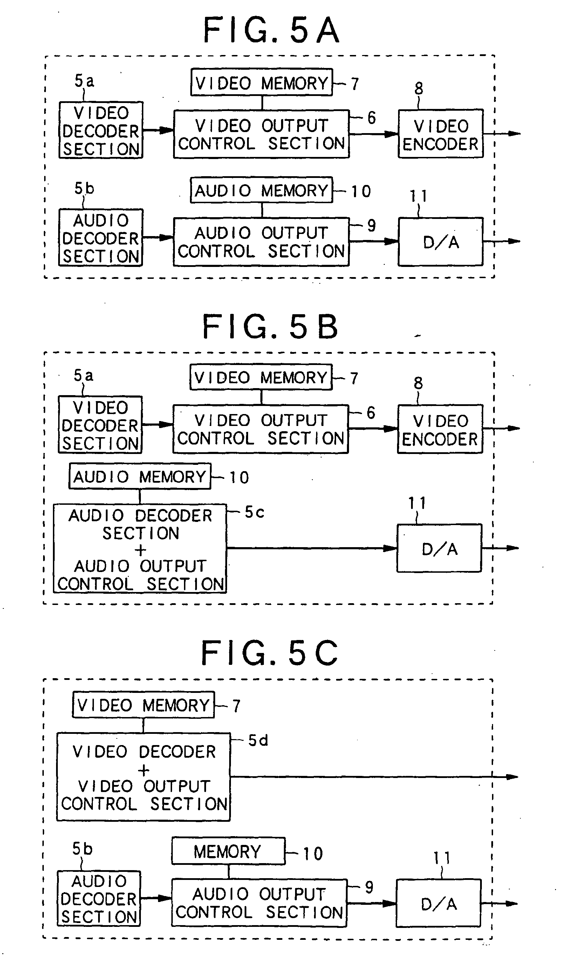

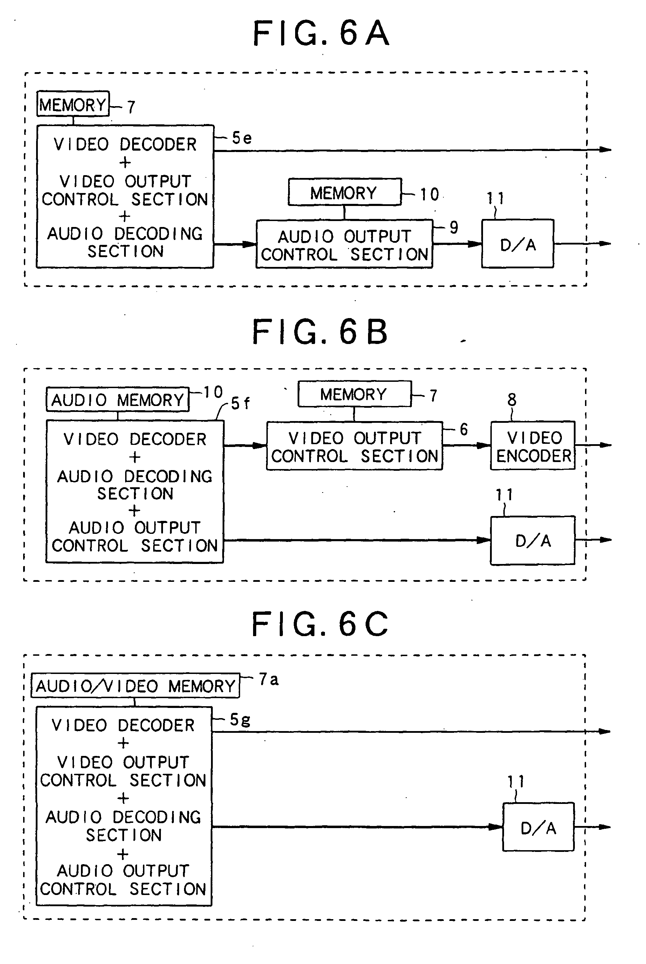

Now, a third embodiment of the present invention will be described with reference to Figs. 5 and 6. Like-common elements shown in the first embodiment are designated by like reference numerals, and a description is omitted here.

In this embodiment, modified examples of the decoder section and the output control sections will be described.

For example, the video/audio decoder section 5 in the first embodiment may be configured to be divided into a video decoder section 5a and an audio decoder section 5b, as shown in Fig. 5A. In this case, an acceleration decoding function is required for both of the video decoder section 5a and audio decoder section 5b. In addition, in this case, the control CPU 4 may perform de-multiplexing of composite stream data in the stream buffer 3.

Next, as shown in Fig. 5B, the audio decoder section 5b is integral with the audio output control section 9, whereby the audio decoder section and audio output control section 5c may be formed. There are many cases in which the audio decoder is generally implemented by DSP (Digital Signal Processor), and the audio output control section can be implemented by DSP, thus making it possible to provide a configuration in which both of them are integrated with each other.

Next, as shown in Fig. 5C, the video decoder section 5a is integral with the video output control section 6, whereby the video decoder section and the video output control section 5d may be formed. In the case where intra-frame compressed streams are decoded, the video decoder section is required to maintain composite picture data, and a memory therefor is required. That memory can share a video memory managed at the video output control section. In this example, the video decoding section has an acceleration decoding function, and the video output control section requires a function for selectively outputting picture data in a memory in accordance with control from external. In this case, composite analog output can be provided directly from the video decoder section and the video output control section 5d.

Next, as shown in Fig. 6A, the video decoder section 5a, video output control section 6, and audio decoder section 5b are integral, and the video decoder section-video output control section-audio decoder section 5e may be formed. In this example, a video/audio decoder section 5 shown in Fig. 1 has functions of the video output control section 6.

Next, as shown in Fig. 6B, the video decoder section 5a, audio decoder section 5b, and audio output control section 9 are integral, and the video decoder section-audio decoder section-audio output control portion 5f may be formed. In this example, the video/audio decoder section shown in Fig. 1 has function of the audio output control section 9.

Next, as shown in Fig. 6C, the video decoder section 5a, video output control section 6, audio decoder section 5b, and audio output control section 9 are integral, and the video decoder section-video output control section-audio decoder section-audio output control section 5g may be formed. In this example, the video/audio decoder section 5 shown in Fig. 1 has functions of the video output control section 6 and audio output control section 9.

As described above, according to the present invention, a variety of configuration examples can be achieved

### (Fourth Embodiment)

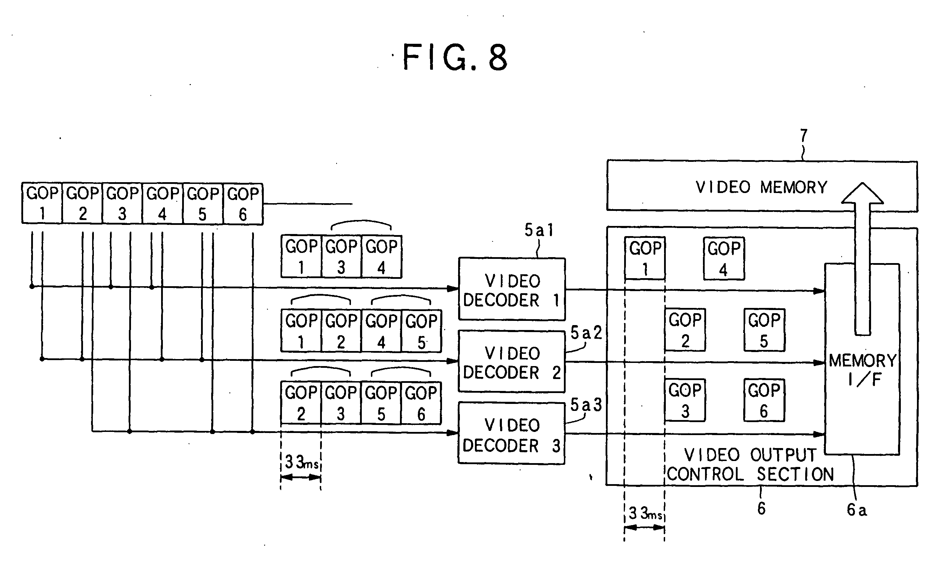

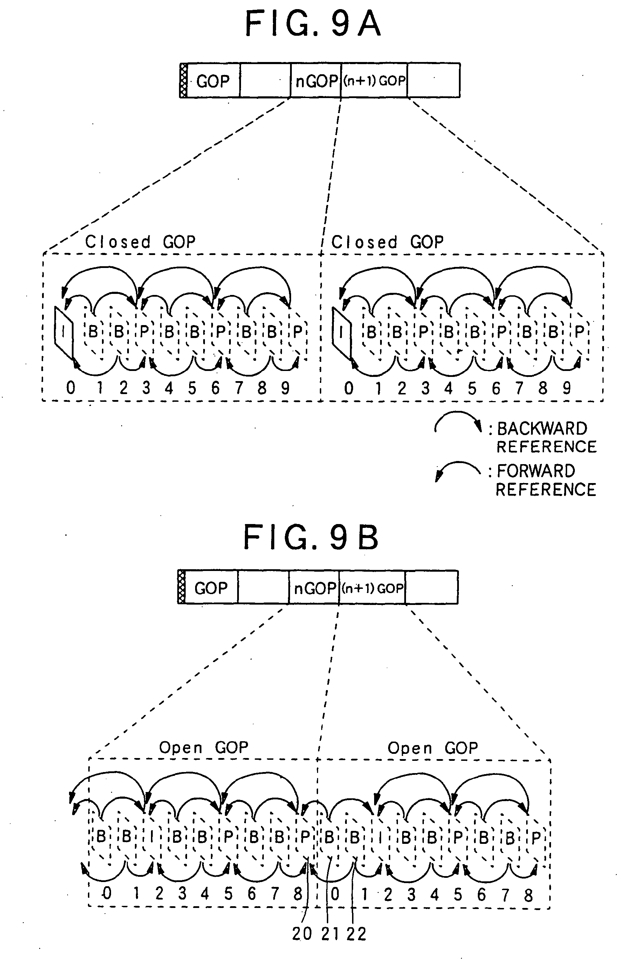

Now, a fourth embodiment of the present invention will be described with reference to Figs. 8 and 9. Common elements shown in each of the embodiments are designated by like reference numerals.

In the configuration example shown in Fig. 5A, the present embodiment shows a configuration example shown in Fig. 5A in which a video decoder section 5a is composed of a plurality of video decoder section 5a1, 5a2, and 5a3.

In the form of compression data, there are a so called closed GOP in which pictures referred to by each GOP are closed, as shown in Fig. 9A, and a so called open GOP in which pictures are referred to across the different GOPs, as shown in Fig. 9B.

In the case of the open GOP, when decoding is performed for each GOP, the pictures referred to access the different GOPs are not normally referred to, as shown in Fig. 9B, and an image becomes discontinuous.

Therefore, in the present embodiment, as shown in Fig. 8, a video decoder section is composed of three video decoder sections. With each video decoder section, two continuous GOPs including pictures referred to across the different GOPs are successively inputted to one video decoder section. In an example shown in Fig. 8, GOP3 and GOP4, GOP1 and GOP2, GOP4 and GOP5, GOP2 and GOP3, and GOP5 and GOP6 include pictures referred to across their respective different GOPs. Thus, arrangement is provided so that these two GOPs are inputted to each of the video decoder sections.

Moreover, of these continuous two GOPs, arrangement is provided so that later GOPs are not superimposed on each video decoder. Namely, the later GOP is inputted to a video decoder section 5a1 to form GOP4; the later GOP is inputted to a video decoder section 5a2 to form GOP2 and GOP5, and the later GOP is inputted to a video decoder section 5a3 to form GOP3 and GOP6. GOP1 inputted to the video decoder section 5a1 is a first GOP.

As a result, at the video decoder section 5a1, GOP4 is decoded by referring to pictures of GOP3. At the video decoder section 5a2, GOP2 is decoded by referring to pictures of GOP1. In addition, GOP5 is decoded by referring to pictures of GOP4. Further, at the video decoder section 5a3, GOP3 is decoded by referring to pictures of GOP2. Furthermore, GOP6 is decoded by referring to pictures of GOP5.

As described above, at the video decoder section 5a1, GOP1, GOP2, GOP4, GOP6, GOP7, ... are sequentially inputted. At the video decoder section 5a2, GOP1, GOP2, GOP4, GOP5, GOP7, GOP8, ... are sequentially inputted. At the video decoder section 5a3, GOP2, GOP3, GOP5, GOP6, GOP8, GOP9, ... are sequentially inputted, and the later GOPs are outputted to video output control sections, respectively.

With such configuration, in the case where an open GOP is employed, reproduction images are prevented from being discontinuous. In addition, even in the case where only normal speed decoder performing normal speed decoding is employed, acceleration decoding of one-and-a-half speed can be performed.

In the embodiment, pitch of tone changes due to a change in reproduction speed. An audio output control section has a function for modifying pitch of tone so as to cope with such speed change, whereby a tone with a predetermined pitch is always reproduced.

In addition, in the format of audio data, MPEG audio or AC-3 and the like as well as MPEG audio may be employed. In this case, it is necessary to calculate an address according to a time stamp after data is outputted from video/audio decoder, that is, after the compressed and encoded data is de-compressed and decoded.

In addition, a compression system is not limited to the MPEG2 system, and the MPEG1 system may be employed.

Further, in the present embodiment, although there has been described an example when the DVD is employed as a storage medium having video and audio data recorded therein, the present invention is not limited to such arrangement. Furthermore, VCD (Video Compact Disc) or hard disc may be employed.

Further, an output of the speed indicator is inputted to a control CPU so as to be outputted from the control CPU to an audio output circuit section.

Furthermore, in the aforementioned embodiment, although there has been described that the capacity of acceleration decoding of the video/audio decoder section 5 is defined as twice of normal speed, the present invention is not limited to such configuration, and may be configured to perform acceleration decoding at another speed.

The invention may be embodied in other specific forms. The present embodiments are therefore to be considered in all respects as illustrative and not restrictive, the scope of the invention being indicated by the appended claims.

## Claims

1. An audio and video reproduction apparatus, wherein the apparatus (1) comprises:
a video output controlling device (6) for controlling an output of a decoded video signal;
an audio output controlling device (9) for controlling an output of a decoded audio signal;
a video/audio signal synchronization controlling device (4) for controlling the video output controlling device (6) so that a decoded video signal whose position on a time axis is coincident with that of the decoded audio signal is outputted in synchronism with the decoded audio signal;
an audio memory (10) for accumulating the decoded audio signal,
wherein the audio output controlling device (9) calculates an audio time stamp of the decoded audio signal, and
the video/audio signal synchronization controlling device (4) controls the video output controlling device (6) so that the decoded video signal whose video time stamp is coincident with the audio time stamp of the decoded audio signal calculated in the audio output controlling device (9) is outputted in synchronism with the decoded audio signal ; and **characterized by**
a video memory (7) for accumulating the decoded video signal,
wherein the video/audio signal synchronization controlling device (4) calculates an address in the video memory corresponding to a video time stamp that is coincident with the audio time stamp acquired from the audio output controlling device (9),
the video output controlling device (6) controls the output of the decoded video signal so that the decoded video signal is outputted according to the address in the video memory (7) calculated by the video/audio signal synchronization controlling device (4).

2. The audio and video reproduction apparatus according to claim 1, **characterized in that** the apparatus (1) further comprises a speed indicating device (12) for indicating a reproduction speed,
wherein the audio output controlling device (9) controls the output of the decoded audio signal based on the reproduction speed indicated by the speed indicating device (12).

3. The audio and video reproduction apparatus according to claim 1, **characterized in that** the apparatus (1) further comprises a speed indicating device (12) for indicating a reproduction speed,
wherein the audio output controlling device (9) controls the output of the decoded audio signal based on the reproduction speed indicated by the speed indicating device (12), and
the video output controlling device (6) controls the output of the decoded video signal so that the decoded video signal is selectively outputted according to the reproduction speed.

4. The audio and video reproduction apparatus according to any one of claims 1 to 3, **characterized in that** the apparatus (1) further comprises a decoder (5) for decoding an audio signal and a video signal in accelerating manner.

5. The audio and video reproduction apparatus according to any one of claims 1 to 4, **characterized in that** the apparatus (1) further comprises a plurality of video signal decoders (5a1, 5a2, 5a3),
wherein contiguous GOPs configuring video signals are distributed to each video signal decoder (5a1, 5a2, 5a3).

6. An audio and video reproduction method, wherein the method comprises the process of:
decoding a video signal;
decoding an audio signal;
controlling an output of the decoded video signal so that the decoded video signal whose position on a time axis is coincident with that of the decoded audio signal is outputted in synchronism with the decoded audio signal;
calculating an audio time stamp of the decoded audio signal,
wherein the process of controlling the output of the decoded video signal controls the output of the decoded video signal so that the decoded video signal whose video time stamp is coincident with the calculated audio time stamp of the decoded audio signal is outputted in synchronism with the decoded audio signal; and **characterized by**
calculating an address in a video memory corresponding to the video time stamp that is coincident with the calculated audio time stamp,
wherein the process of controlling the output of the decoded video signal controls the output of the decoded video signal so that the decoded video signal is outputted according to the calculated address in the video memory.

7. The audio and video reproduction method according to claim 6, **characterized in that** the method further comprises the process of:
indicating a reproduction speed, and
controlling an output of the decoded audio signal based on the indicated reproduction speed.

8. The audio and video reproduction method according to claim 6, **characterized in that** the method further comprises the process of:
indicating a reproduction speed; and
controlling an output of the decoded audio signal based on the indicated reproduction speed,
wherein the process of controlling the output of the decoded video signal controls the output of the decoded video signal so that the decoded video signal is selectively outputted according to the reproduction speed.

9. The audio and video reproduction method according to any one of claims 6 to 8, **characterized in that** the method further comprises the process of: decoding an audio signal in accelerating manner; and decoding a video signal in accelerating manner.

10. The audio and video reproduction method according to any one of claims 6 to 9, **characterized in that** the method further comprises the process of: distributing contiguous GOPs configuring video signals to a plurality of decoding phase; and decoding a video signal of distributed contiguous GOPs in each of a plurality of decoding phase.

## Patentansprüche

1. Audio- und Video-Wiedergabegerät, wobei das Gerät (1) Folgendes aufweist:
eine Videoausgabesteuervorrichtung (6) zum Steuern einer Ausgabe eines dekodierten Videosignals;
eine Audioausgabesteuervorrichtung (9) zum Steuern einer Ausgabe eines dekodierten Audiosignals;
eine Vorrichtung (4) zum Steuern der Synchronisation des Video-/Audiosignals zum Steuern der Videoausgabesteuervorrichtung (6) derart, dass ein dekodiertes Videosignal, dessen Position auf einer Zeitachse mit der des dekodierten Audiosignals übereinstimmt, mit dem dekodierten Audiosignal synchron ausgegeben wird;
einen Audiospeicher (10) zum Akkumulieren des dekodierten Audiosignals,
wobei die Audioausgabesteuervorrichtung (9) einen Audio-Zeitstempel des dekodierten Audiosignals berechnet, und
die Vorrichtung (4) zum Steuern der Synchronisation des Video-/Audiosignals die Videoausgabesteuervorrichtung (6) derart steuert, dass das dekodierte Videosignal, dessen Video-Zeitstempel mit dem Audioausgabesteuervorrichtung (9) berechneten von der Audio-Zeitstempel des dekodierten Audiosignals übereinstimmend ist, welches in der wird, mit dem dekodierten Audiosignal synchron ausgegeben wird, **gekennzeichnet durch**
einen Videospeicher (7) zum Akkumulieren des dekodierten Videosignals,
wobei die Vorrichtung (4) zum Steuern der Synchronisation des Video-/Audiosignals eine Adresse im Videospeicher berechnet, welche einem Video-Zeitstempel entspricht, welcher mit dem aus der Audioausgabesteuervorrichtung (9) erhaltenen Audio-Zeitstempel übereinstimmt und,
die Videoausgabesteuervorrichtung (6) die Ausgabe des dekodierten Videosignals derart steuert, dass das dekodierte Videosignal gemäß der Adresse im Videospeicher (7) ausgegeben wird, welche **durch** die Vorrichtung (4) zum Steuern der Synchronisation des Video-/Audiosignals berechnet wird.

2. Audio- und Video- Widergabegerät nach Anspruch 1, **dadurch gekennzeichnet, dass** das Gerät (1) zudem eine Geschwindigkeitsanzeigevorrichtung (12) zum Anzeigen einer Wiedergabegeschwindigkeit aufweist,
wobei die Audioausgabesteuervorrichtung (9) die Ausgabe des dekodierten Audiosignals basierend auf der Wiedergabegeschwindigkeit steuert, welche durch die Geschwindigkeitsanzeigevorrichtung (12) angezeigt wird.

3. Audio- und Video-Wiedergabegerät nach Anspruch 1, **dadurch gekennzeichnet, dass** das Gerät (1) zudem eine Geschwindigkeitsanzeigevorrichtung (12) zum Anzeigen einer Wiedergabegeschwindigkeit aufweist,
wobei die Audioausgabesteuervorrichtung (9) die Ausgabe des dekodierten Audiosignals basierend auf der Wiedergabegeschwindigkeit steuert, welche durch die Geschwindigkeitsanzeigevorrichtung (12) angezeigt wird, und
die Videoausgabesteuervorrichtung (6) die Ausgabe des dekodierten Videosignals derart steuert, dass das dekodierte Videosignal gemäß der Widergabegeschwindigkeit selektiv ausgegeben wird.

4. Audio- und Video-Wiedergabegerät nach einem der Ansprüche 1 bis 3, **dadurch gekennzeichnet, dass** das Gerät (1) zudem einen Dekodierer (5) zum beschleunigten Dekodieren eines Audiosignals und eines Videosignals aufweist.

5. Audio- und Video-Wiedergabegerät nach einem der Ansprüche 1 bis 4, **dadurch gekennzeichnet, dass** das Gerät (1) zudem eine Vielzahl von Videosignaldekodierern (5a1, 5a2, 5a3) aufweist,
wobei Videosignale, welche zusammenhängende GOPs darstellen an alle Videosignaldekodierer (5a1, 5a2, 5a3) verteilt werden.

6. Audio- und Video-Wiedergabeverfahren, wobei das Verfahren die Folgenden Prozesse aufweist:
Dekodieren eines Videosignals;
Dekodieren eines Audiosignals;
Steuern einer Ausgabe des dekodierten Videosignals derart, dass das dekodierte Videosignal, dessen Position auf einer Zeitachse mit der des dekodierten Audiosignals übereinstimmend ist, mit dem dekodierten Audiosignal synchron ausgegeben wird;
Berechnen eines Audio-Zeitstempels des dekodierten Audiosignals,
wobei der Prozess zum Steuern der Ausgabe des dekodierten Videosignals die Ausgabe des dekodierten Videosignals derart steuert, dass das dekodierte Videosignal, dessen Video-Zeitstempel mit dem berechneten Audio-Zeitstempel des dekodierten Audiosignals übereinstimmend, mit dem dekodierten Audiosignal synchron ausgegeben wird, **gekennzeichnet durch**
das Berechnen einer Adresse in einem Videospeicher, welche dem Video-Zeitstempel entspricht, welcher mit dem berechneten Audio-Zeitstempel übereinstimmend,
wobei der Prozess des Steuerns der Ausgabe des dekodierten Videosignals die Ausgabe des dekodierten Videosignals derart steuert, dass das dekodierte Videosignal gemäß der berechneten Adresse im Videospeicher ausgegeben wird.

7. Audio- und Video-Wiedergabeverfahren nach Anspruch 6,
**dadurch gekennzeichnet, dass** das Verfahren zudem die folgenden Prozesse aufweist:
Anzeigen einer Wiedergabegeschwindigkeit, und
Steuern einer Ausgabe des dekodierten Audiosignals basierend auf der angezeigten Wiedergabegeschwindigkeit.

8. Audio- und Video-Wiedergabeverfahren nach Anspruch 6, **dadurch gekennzeichnet, dass** das Verfahren zudem die folgenden Prozesse aufweist:
Anzeigen einer Wiedergabegeschwindigkeit; und
Steuern einer Ausgabe des dekodierten Audiosignals basierend auf der angezeigten Wiedergabegeschwindigkeit,
wobei der Prozess zum Steuern der Ausgabe des dekodierten Videosignals die Ausgabe des dekodierten Videosignals derart steuert, dass das dekodierte Videosignal gemäß der Wiedergabegeschwindigkeit selektiv ausgegeben wird.

9. Audio- und Video-Wiedergabeverfahren nach einem der Ansprüche 6 bis 8, **dadurch gekennzeichnet, dass** das Verfahren zudem die folgenden Prozesse aufweist:
beschleunigtes Dekodieren eines Audiosignals; und
beschleunigtes Dekodieren eines Videosignals.

10. Audio- und Video-Wiedergabeverfahren nach einem der Ansprüche 6 bis 9, **dadurch gekennzeichnet, dass** das Verfahren zudem die folgenden Prozesse aufweist:
Verteilen von Videosignalen, welche zusammenhängende GOPs darstellen, auf eine Vielzahl von Dekodierphasen; und
Dekodieren eines Videosignals der verteilten angrenzenden Bildsequenzen in jeder einer Vielzahl von Dekodierphasen.

## Revendications

1. Appareil de reproduction audio et vidéo, dans lequel l'appareil (1) comprend :
un dispositif de commande de sortie vidéo (6) pour commander la sortie d'un signal vidéo décodé ;
un dispositif de commande de sortie audio (9) pour commander la sortie du signal audio décodé ;
un dispositif de commande de synchronisation de signal vidéo/audio (4) pour commander le dispositif de commande de sortie vidéo (6) de manière qu'un signal vidéo décodé dont la position sur un axe du temps est coïncidente avec celle du signal audio décodé soit délivré en sortie en synchronisme avec le signal audio décodé ;
une mémoire audio (10) pour accumuler le signal audio décodé,
dans lequel le dispositif de commande de sortie audio (9) calcule un horodatage audio du signal audio décodé, et
le dispositif de commande de synchronisation de signal vidéo/audio (4) commande le dispositif de commande de sortie vidéo (6) de manière que le signal vidéo décodé dont l'horodatage vidéo est coïncident avec l'horodatage audio du signal audio décodé calculé dans le dispositif de commande de sortie audio (9) soit délivré en sortie en synchronisme avec le signal audio décodé ; et **caractérisé par**
une mémoire vidéo (7) pour accumuler le signal vidéo décodé,
dans lequel le dispositif de commande de synchronisation de signal vidéo/audio (4) calcule une adresse dans la mémoire vidéo correspondant à un horodatage vidéo qui est coïncident avec l'horodatage audio acquis à partir du dispositif de commande de sortie audio (9),
le dispositif de commande de sortie vidéo (6) commande la sortie du signal vidéo décodé de manière que le signal vidéo décodé soit délivré en sortie en fonction de l'adresse dans la mémoire vidéo (7) calculée par le dispositif de commande de synchronisation de signal vidéo/audio (4).

2. Appareil de reproduction audio et vidéo selon la revendication 1, **caractérisé en ce que** l'appareil (1) comprend en outre un dispositif indicateur de vitesse (12) pour indiquer une vitesse de reproduction,
dans lequel le dispositif de commande de sortie audio (9) commande la sortie du signal audio décodé sur la base de la vitesse de reproduction indiquée par le dispositif indicateur de vitesse (12).

3. Appareil de reproduction audio et vidéo selon la revendication 1, **caractérisé en ce que** l'appareil (1) comprend en outre un dispositif indicateur de vitesse (12) pour indiquer une vitesse de reproduction,
dans lequel le dispositif de commande de sortie audio (9) commande la sortie du signal audio décodé sur la base de la vitesse de reproduction indiquée par le dispositif indicateur de vitesse (12), et
le dispositif de commande de sortie vidéo (6) commande la sortie du signal vidéo décodé de manière que le signal vidéo décodé soit délivré sélectivement en sortie en fonction de la vitesse de reproduction.

4. Appareil de reproduction audio et vidéo selon l'une quelconque des revendications 1 à 3, **caractérisé en ce que** l'appareil (1) comprend en outre un décodeur (5) pour décoder un signal audio et un signal vidéo d'une manière accélérée.

5. Appareil de reproduction audio et vidéo selon l'une quelconque des revendications 1 à 4, **caractérisé en ce que** l'appareil (1) comprend en outre une pluralité de décodeurs de signal vidéo (5a1, 5a2, 5a3),
dans lequel des signaux vidéo de groupes d'images contigus sont distribués à chaque décodeur de signal vidéo (5a1, 5a2, 5a3).

6. Procédé de reproduction audio et vidéo, dans lequel le procédé comprend le processus suivant :
décoder un signal vidéo ;
décoder un signal audio ;
commander une sortie du signal vidéo décodé de manière que le signal vidéo décodé dont la position sur un axe du temps est coïncidente avec celle du signal audio décodé soit délivré en sortie en synchronisme avec le signal audio décodé ;
calculer un horodatage audio du signal audio décodé,
dans lequel le processus de commande de la sortie du signal vidéo décodé commande la sortie du signal vidéo décodé de manière que le signal vidéo décodé dont l'horodatage vidéo est coïncident avec l'horodatage audio du signal audio décodé calculé du signal audio décodé soit délivré en sortie en synchronisme avec le signal audio décodé ; et **caractérisé en ce qu'**il consiste à
calculer une adresse dans la mémoire vidéo correspondant à un horodatage vidéo qui est coïncident avec l'horodatage audio calculé,
dans lequel le processus de commande de la sortie du signal vidéo décodé commande la sortie du signal vidéo décodé de manière que le signal vidéo décodé soit délivré en sortie en fonction de l'adresse calculée dans la mémoire vidéo.

7. Procédé de reproduction audio et vidéo selon la revendication 6, **caractérisé en ce que** le procédé comprend en outre le processus suivant :
indiquer une vitesse de reproduction, et
commander une sortie du signal audio décodé sur la base de la vitesse de reproduction.

8. Procédé de reproduction audio et vidéo selon la revendication 6, **caractérisé en ce que** le procédé comprend en outre le processus suivant :
indiquer une vitesse de reproduction ; et
commander une sortie du signal audio décodé sur la base de la vitesse de reproduction,
dans lequel le processus de commande de la sortie du signal vidéo décodé commande la sortie du signal vidéo décodé de manière que le signal vidéo décodé soit délivré sélectivement en sortie en fonction de la vitesse de reproduction.

9. Procédé de reproduction audio et vidéo selon l'une quelconque des revendications 6 à 8, **caractérisé en ce que** le procédé comprend en outre le processus suivant : décoder un signal audio d'une manière accélérée ; et décoder un signal vidéo d'une manière accélérée.

10. Procédé de reproduction audio et vidéo selon l'une quelconque des revendications 6 à 9, **caractérisé en ce que** le procédé comprend en outre le processus suivant : distribuer des signaux vidéo de groupes d'images contigus à une pluralité de phases de décodage ; et décoder un signal vidéo de groupes d'images contigus distribués à chacune d'une pluralité de phases de décodage.
